# FASCICULE DE BREVET EUROPEEN

(11) **EP 2 577 894 B1**
(45) Date de publication et mention de la délivrance du brevet: **22.08.2018**
(21) Numéro de dépôt: 11727274.0
(22) Date de dépôt: 27.05.2011
(51) Int. Cl.: H04J 3/06, H04W 56/00

(54) **PROCEDE ET EQUIPEMENT DE MISE A JOUR D'UNE REFERENCE DE SYNCHRONISATION TEMPORELLE**
VERFAHREN UND VORRICHTUNG ZUR AKTUALISIERUNG VON TEMPORÄRER SYNCHRONISATIONSREFERENZ
METHOD AND EQUIPMENT OF UPDATING A TEMPORAL SYNCHRONIZATION REFERENCE

(30) Priorité: 31.05.2010 FR 1054216
(43) Date de publication de la demande: 10.04.2013
(73) Titulaire: Orange, 75015 Paris (FR)
(72) Inventeur: JOBERT, Sébastien, F-22140 Begard (FR); BOURGART, Fabrice, F-22700 Perros Guirec (FR)
(86) Numéro de dépôt international: PCT/FR2011/051209
(87) Numéro de publication internationale: WO 2011/151576

(56) Documents cités:
- FR-A1- 2 916 596
- US-A1- 2006 045 134
- US-A1- 2009 086 764
- US-B1- 6 199 169
- RUFFINI S: "NETWORK SYNCHRONIZATION-STAND-ALONE PRODUCTS THAT SUPPORT THE DESIGN OF SYNCHRONIZATION NETWORKS", ERICSSON REVIEW (INCL. ON), TELEFONAKTIEBOLAGET L M ERICSSON, SE, no. 1, 1 janvier 2004 (2004-01-01), pages 32-41, XP001217355, ISSN: 0014-0171

## Description

L'invention se situe dans le domaine des télécommunications, et plus particulièrement celui des réseaux mobiles, comme par exemple les réseaux LTE (*Long Term Evolution*)*.* De tels réseaux font émerger un besoin de fournir aux stations de base appartenant à un réseau de communication mobile une synchronisation commune temporelle avec une exactitude de l'ordre de la microseconde (µs). Des exemples sont fournis dans les documents US2006/045134 et US6199169. La difficulté de fournir une telle synchronisation temporelle en dehors de solutions satellitaires telles que l'utilisation de modules GPS (*Global Positioning System*) nécessite le développement de protocoles de mise à l'heure, tel que PTPv2 (*Precision Time Protocol*)*.*

Afin de fournir ce type de synchronisation temporelle, il est connu de combiner une synchronisation temporelle avec une synchronisation en fréquence stable et exacte, tel que c'est le cas lorsqu'elle est transportée par la couche physique, par exemple au moyen d'une technique telle que « *Synchronous Ethernet ».*

Ainsi il est possible pour un équipement du réseau de maintenir sa référence de synchronisation temporelle à partir de la synchronisation en fréquence entre deux mises à jour de la synchronisation temporelle. Un exemple est fourni dans le document FR2916596. Cependant, l'exactitude de la synchronisation en fréquence peut changer, par exemple à cause d'une dérive de la synchronisation en fréquence ou en cas de panne sur le réseau. La synchronisation des différents équipements appartenant au réseau s'en trouve dégradée. Ceci a pour conséquence l'émission de nombreux messages de mise à jour de la synchronisation temporelle à destination des différents équipements du réseau afin d'assurer la continuité du service.

Un des buts de l'invention est de remédier à des inconvénients de l'état de l'art.

A cette fin, l'invention propose un procédé de mise à jour d'une référence de synchronisation temporelle échangée entre un premier équipement et au moins un deuxième équipement appartenant à un réseau de communication, le procédé comprenant une étape de détermination d'une périodicité de mise à jour de la référence de synchronisation temporelle en fonction d'une information de traçabilité relative à une référence de synchronisation en fréquence permettant de maintenir la référence de synchronisation temporelle du deuxième équipement.

Une telle solution permet, en adaptant la périodicité de mise à jour de la référence de synchronisation temporelle, de réduire la quantité de données échangées sur le réseau pour maintenir la référence de synchronisation temporelle du deuxième équipement. Une référence de synchronisation temporelle comprend des données permettant de synchroniser le deuxième équipement en temps et/ou en phase.

L'information de traçabilité relative à une référence de synchronisation en fréquence comprend une indication de la qualité et de l'exactitude de la synchronisation en fréquence utilisée pour maintenir la référence de synchronisation temporelle du deuxième équipement entre deux mises à jour.

Une telle indication de qualité et d'exactitude permet de savoir si la référence de synchronisation en fréquence est traçable à une PRC (*Primary Reference Clock*), c'est-à-dire que la référence de synchronisation en fréquence est de bonne qualité, ou une SSU (*Synchronization Supply Unit*)*,* c'est-à-dire que la référence de synchronisation en fréquence est de qualité inférieure.

Une telle solution trouve également un intérêt en cas d'interruption de la transmission de la référence de synchronisation temporelle.

En effet, dans une telle situation, la référence de synchronisation en fréquence permet de maintenir la référence de synchronisation temporelle du deuxième équipement pendant la durée de la panne assurant ainsi une continuité de service.

Une telle solution permet notamment de remplacer un mécanisme de protection de la transmission de la référence de synchronisation temporelle, en particulier si la période de maintien est suffisamment longue pour permettre de traiter la panne. Il est alors est possible d'éviter le déploiement d'une seconde source primaire de synchronisation temporelle pour remplacer la première source primaire de synchronisation temporelle en cas de panne de cette dernière.

Selon un mode de réalisation, le procédé comprend, préalablement à l'étape de détermination, une étape de réception de l'information de traçabilité.

L'information de traçabilité permet de déterminer quasi-instantanément la périodicité de mise à jour de la référence de synchronisation temporelle et ainsi de réagir rapidement aux pannes éventuelles relatives à la synchronisation en fréquence.

Selon une caractéristique du procédé de mise à jour, l'information de traçabilité est émise par le deuxième équipement à destination du premier équipement.

Dans un tel mode de réalisation, la référence de synchronisation en fréquence est délivrée, par exemple, par une source de référence de synchronisation en fréquence propre au deuxième équipement. Le deuxième équipement qui a connaissance de l'information de traçabilité relative à une référence de synchronisation en fréquence transmet cette information au premier équipement qui détermine alors la périodicité de mise à jour de référence de synchronisation temporelle.

Selon une caractéristique du procédé de mise à jour, les étapes de réception et de détermination sont mises en oeuvre par le deuxième équipement et le procédé comprend en outre une étape d'émission, par le deuxième équipement et à destination du premier équipement, d'un message comprenant la périodicité de mise à jour de la référence de synchronisation temporelle.

Dans un tel mode de réalisation, la référence de synchronisation en fréquence étant délivrée par une source de référence de synchronisation en fréquence propre au deuxième équipement, le deuxième équipement détermine la périodicité de mise à jour de référence de synchronisation temporelle. Le deuxième équipement indique au premier équipement la périodicité des mises à jour de la référence de synchronisation temporelle à lui fournir par exemple en retransmettant directement l'information de traçabilité relative à la référence de synchronisation en fréquence ou bien en indiquant explicitement la valeur de la périodicité déterminée.

Selon une caractéristique du procédé de mise à jour, les étapes de réception et de détermination sont mises en oeuvre par le premier équipement et le procédé comprend en outre une étape d'envoi au deuxième équipement de la référence de synchronisation en fréquence et de l'information de traçabilité associée.

L'invention concerne encore un équipement apte à échanger une référence de synchronisation temporelle avec au moins un autre équipement appartenant à un réseau de communication, l'équipement comprenant des moyens de détermination de la périodicité de mise à jour de la référence de synchronisation temporelle en fonction d'une information de traçabilité relative à une référence de synchronisation en fréquence permettant de maintenir la référence de synchronisation temporelle de l'autre équipement.

Un tel équipement consiste par exemple en un équipement de terminaison de ligne OLT (*Optical Line Terminaison*) appartenant à un réseau d'accès optique passif tel qu'un PON (*Passive Optical Network).*

Selon une caractéristique de l'équipement, celui-ci comprend en outre des moyens de réception de l'information de traçabilité relative à la référence de synchronisation en fréquence.

Selon une caractéristique de l'équipement, celui-ci comprend en outre des moyens d'émission d'un message comprenant la périodicité de mise à jour de la référence de synchronisation temporelle.

L'invention concerne encore un réseau de communication comprenant au moins un premier équipement apte à échanger une référence de synchronisation temporelle avec au moins un deuxième équipement, le premier équipement comprenant des moyens de réception de l'information de traçabilité relative à la référence de synchronisation en fréquence et des moyens de détermination de la périodicité de mise à jour de la référence de synchronisation temporelle en fonction d'une information de traçabilité relative à une référence de synchronisation en fréquence permettant de maintenir la référence de synchronisation temporelle du deuxième équipement.

Selon d'autres aspects, l'invention concerne également un programme d'ordinateur comprenant des instructions de code de programme pour la mise en oeuvre des étapes du procédé de mise à jour d'une référence de synchronisation temporelle échangée entre un premier équipement et au moins un deuxième équipement appartenant à un réseau de communication décrit précédemment, lorsque ces programmes sont exécutés par un ordinateur.

Le programme d'ordinateur décrit ci-dessus peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'enregistrement lisible par un ordinateur sur lequel est enregistré un programme d'ordinateur tel que décrit précédemment.

Le support d'informations peut être n'importe quelle entité ou dispositif capable de stocker le programme. Par exemple, le support peut comporter un moyen de stockage, tel qu'une ROM (pour *"Read Only Memory"*)*,* par exemple un CD ROM ou une ROM de circuit microélectronique, ou encore un moyen d'enregistrement magnétique, par exemple une disquette (*floppy disc*) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

D'autres caractéristiques et avantages apparaîtront à la lecture de modes de réalisation décrits en référence aux dessins dans lesquels :
- la figure 1 représente un réseau de communication comprenant un premier et un deuxième équipement échangeant une référence de synchronisation temporelle,
- la figure 2 représente les étapes d'un procédé de mise à jour d'une synchronisation temporelle dans un premier mode de réalisation de l'invention,
- la figure 3 représente les étapes du procédé de mise à jour d'une synchronisation temporelle dans un deuxième mode de réalisation de l'invention,
- la figure 4 représente les étapes du procédé de mise à jour d'une synchronisation temporelle dans un troisième mode de réalisation de l'invention.

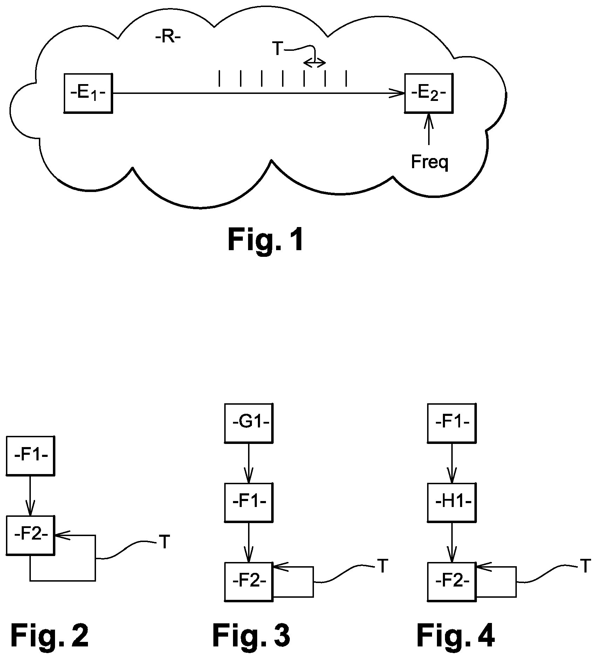

La **figure 1** représente un réseau de communication R dans lequel un procédé de mise à jour d'une référence de synchronisation temporelle échangée entre un premier équipement E₁ et au moins un deuxième équipement E₂ appartenant au réseau R est mis en oeuvre. Ceci permet de synchroniser temporellement l'équipement E₂ avec l'équipement E₁.

Ainsi, l'équipement E₂ reçoit de façon périodique, par exemple toutes les T secondes (s) une référence de synchronisation temporelle émise par l'équipement E₁, lequel est, par exemple, connecté à une source de synchronisation temporelle telle qu'un module GPS (non représenté sur la figure 1). A titre d'exemple supplémentaire, la source de synchronisation temporelle peut être reçue d'un autre équipement en amont de l'équipement E₁, non représenté sur la figure 1.

Un exemple d'un protocole permettant la synchronisation de l'équipement E₂ est le protocole PTPv2. Un tel protocole se base sur l'échange de messages de type PTP (*Precision Time Protocol*) entre l'équipement E₁ et l'équipement E₂ pour transférer des informations d'horodatage telles que des estampilles temporelles (ou *time-stamps* en anglais).

De tels messages PTP sont échangés entre l'équipement E₁ et l'équipement E₂ mais également entre l'équipement E₂ et l'équipement E₁ afin d'estimer le délai de transmission des messages PTP au travers du réseau R. Une fois le délai de transmission des messages PTP connu, il peut alors être compensé, notamment pour les messages PTP émis depuis l'équipement E₁ à destination de l'équipement E₂ afin que l'équipement E₂ soit synchronisé correctement avec l'équipement E₁.

A l'issue de cet échange de messages PTP entre l'équipement E₁ et l'équipement E₂, l'équipement E₂ est synchronisé avec l'équipement E₁. Une telle synchronisation de l'équipement E₂ peut, dans un mode de réalisation particulier de l'invention, être effectuée de façon progressive afin d'éviter un changement trop brusque de référence de synchronisation temporelle de l'équipement E₂.

Cet échange de messages PTP entre l'équipement E₁ et l'équipement E₂ est réitéré de façon périodique toutes les T secondes de façon à maintenir l'équipement E₂ synchronisé avec l'équipement E1.

Entre deux mises à jour de la synchronisation temporelle, l'équipement E₂ doit maintenir sa référence de synchronisation temporelle pour rester synchronisé avec l'équipement E₁.

Pour cela, l'équipement E2 reçoit une référence de synchronisation en fréquence Freq émise par une source de synchronisation en fréquence.

Dans un premier mode de réalisation de l'invention, la référence de synchronisation en fréquence Freq est transmise par l'équipement E₁ à destination de l'équipement E₂ par une synchronisation en fréquence transportée par la couche physique. Il est bien entendu qu'une référence de synchronisation en fréquence ainsi qu'une information relative à la traçabilité de celle-ci peuvent être reçues par l'équipement E1 d'un autre équipement.

En option, une information relative à la traçabilité de la référence de synchronisation en fréquence Freq est transmise à destination de l'équipement E₂ avec la référence de synchronisation en fréquence Freq.

Dans le cas de figure où l'équipement E₁ ne comporte pas de source de synchronisation en fréquence, l'équipement E₁ comprend une information relative à la traçabilité de la référence de synchronisation en fréquence Freq préalablement configurée. Cette configuration peut également avoir été mise en oeuvre sur réception de l'information relative à la traçabilité.

Dans une première variante du premier mode de réalisation de l'invention, l'équipement E₁ reçoit la référence de synchronisation en fréquence Freq depuis une source de synchronisation en fréquence externe.

Dans une deuxième variante du premier mode de réalisation, l'équipement E₁ comprend un oscillateur local non-verrouillé sur une référence externe (en mode libre ou free running) qui fournit une synchronisation en fréquence. Dans ce cas de figure, l'équipement E₁ comprend une information relative à la traçabilité de la référence de synchronisation en fréquence Freq préalablement configurée.

Dans un deuxième mode de réalisation de l'invention, l'équipement E₂ déduit une référence de synchronisation en fréquence Freq à partir des messages PTP qui peuvent servir à maintenir une fréquence de référence. Les différentes manières pour l'équipement E1 d'obtenir la référence de synchronisation en fréquence restent applicables.

Dans un troisième mode de réalisation de l'invention, l'équipement E₂ peut avoir accès à une référence de synchronisation en fréquence Freq stable et exacte via une source de fréquence externe connectée à l'équipement E₂.

Afin de réduire la périodicité des mises à jour de la synchronisation temporelle de l'équipement E₂ et ainsi réduire la quantité de messages échangés entre les équipements E₁ et E₂ au travers du réseau, il est intéressant d'adapter la périodicité T des mises à jour de la synchronisation temporelle. Ceci permet de prendre en considération un objectif de synchronisation temporelle à atteindre, mais également la vitesse de dérive de la référence de synchronisation temporelle de l'équipement E₂ entre deux mises à jour.

Afin d'adapter la périodicité de mise à jour de la synchronisation temporelle au mieux, il est intéressant de prendre en considération la traçabilité de la référence de synchronisation en fréquence Freq.

A cette fin, la périodicité des mises à jour de synchronisation temporelle de l'équipement E₂ est déterminée en fonction d'une information relative à la traçabilité de référence de synchronisation en fréquence Freq.

Ainsi, en référence à la **figure 2****,** un équipement E₁ appartenant au réseau R met en oeuvre une étape F1 d'un procédé de mise à jour de la référence de synchronisation temporelle de l'équipement E₂, au cours de laquelle l'équipement détermine la périodicité de mise à jour de la référence de synchronisation temporelle en fonction de l'information de traçabilité relative à la référence de synchronisation en fréquence.

Afin de déterminer la périodicité de mise à jour de la référence de synchronisation temporelle, il est possible de consulter une table mémorisée dans l'équipement mettant en oeuvre l'étape F1 de détermination.

Une telle table comprend par exemple une correspondance entre l'information de traçabilité relative à la référence de synchronisation en fréquence Freq avec une valeur de la périodicité T de mise à jour de la synchronisation temporelle.

Ainsi, par exemple, pour une exactitude de synchronisation temporelle visée de 50ns au niveau de l'équipement E₂, la table peut comprendre les entrées suivantes :
- pour une référence de synchronisation en fréquence dont la traçabilité est d'une PRC (*Primary Reference Clock*)*,* soit une dérive de 0.01 ppb (*parts per billion* - parties par milliard) ce qui correspond à une accumulation d'erreur de phase de 0,01 nanoseconde par seconde, la durée de la périodicité T est de 5000 secondes,
- pour une référence de synchronisation en fréquence dont la traçabilité est d'une SSU (*Synchronization Supply Unit*)*,* soit une dérive de 10 ppb ce qui correspond à une accumulation d'erreur de phase de dix nanosecondes par seconde, la durée de la périodicité T est de 5 secondes,
- pour une référence de synchronisation en fréquence dont la traçabilité est d'une SEC/EEC (*SDH Equipment Clock* / *synchronous Ethernet Equipment Clock*)*,* soit une dérive de 4.6 ppm (*parts per million* - parties par million) ce qui correspond à une accumulation d'erreur de phase de 4,6 microsecondes par seconde, la durée de la périodicité est d'environ un centième de seconde.

Au cours d'une étape F2, l'équipement E1 transmet une mise à jour de la synchronisation temporelle à l'équipement E₂.en fonction de la périodicité T déterminée au cours de l'étape F1.

Dans le premier et le deuxième modes de réalisation de l'invention, l'équipement E1 met en oeuvre l'étape de détermination F1. En effet, dans le premier mode de réalisation, l'équipement E₁ obtient l'information de traçabilité relative à la référence de synchronisation en fréquence Freq et détermine la périodicité de mise à jour de la référence de synchronisation temporelle par consultation de la table de correspondance. L'équipement E₁ émet alors à destination l'équipement E₂ la référence de synchronisation en fréquence, l'information de traçabilité et éventuellement la périodicité de mise à jour de la référence de synchronisation temporelle. On constate ainsi que l'équipement E₂ reçoit l'information de traçabilité et peut à son tour mettre en oeuvre le procédé selon l'invention pour déterminer la périodicité de la mise à jour de la référence de synchronisation temporelle pour un autre équipement, non représenté sur la figure 1.

Dans le troisième mode de réalisation de l'invention, la référence de synchronisation en fréquence Freq est délivrée par une source de fréquence externe connectée directement à l'équipement E₂.

Dans une première implémentation de ce troisième mode de réalisation de l'invention représentée à la **figure 3**, l'équipement E₂ émet au cours d'une étape G1 l'information de traçabilité relative à la référence de synchronisation en fréquence Freq à destination de l'équipement E₁.

A réception de l'information de traçabilité relative à la référence de synchronisation en fréquence Freq, l'équipement E1 met en oeuvre l'étape de détermination F1, puis l'étape de transmission F2 en fonction de la périodicité T déterminée au cours de l'étape F1.

Ainsi, dans cette première implémentation du troisième mode de réalisation de l'invention, l'adaptation de la périodicité de mise à jour de la synchronisation temporelle se fait à la demande de l'équipement E₂ qui a connaissance de l'information de traçabilité relative à la référence de synchronisation en fréquence Freq.

Dans une deuxième implémentation de ce troisième mode de réalisation de l'invention représenté à la **figure 4****,** l'équipement E₂ met en oeuvre l'étape de détermination F1. Puis, au cours d'une étape H1, l'équipement E₂ transmet la périodicité de mise à jour de la référence de synchronisation temporelle déterminée à l'équipement E₁.

Dans cette deuxième implémentation, l'équipement E₂ comprend des moyens de détermination de la périodicité tels que la table de correspondance. Une fois déterminée la périodicité de mise à jour de la synchronisation temporelle, l'équipement E₂ en informe l'équipement E₁.

Pour cela, l'équipement E₂ demande explicitement à l'équipement E₁ d'envoyer des mises à jour de la synchronisation temporelle avec une périodicité donnée. Ainsi, au cours de l'étape F2, l'équipement E1 transmet une mise à jour de la synchronisation temporelle à l'équipement E₂.en fonction de la périodicité T déterminée par l'équipement E₂ au cours de l'étape F1.

Dans d'autres variantes de réalisation de l'invention, l'équipement E₂ peut demander à l'équipement E₁ de transmettre des mises à jour de la synchronisation temporelle à une périodicité T' donnée différente de la périodicité déterminée lors de l'étape F1. Ceci permet à l'équipement E₂ de maintenir une synchronisation temporelle par exemple lorsqu'il ne reçoit plus correctement la référence de synchronisation en fréquence Freq. La périodicité T' est déterminée en fonction de la qualité d'une source de synchronisation temporelle comprise dans l'équipement E₂. Une telle source de synchronisation temporelle consiste par exemple en un oscillateur local non-verrouillé sur une référence externe (en mode libre ou free running)

L'invention trouve également une application en cas de panne au niveau de l'équipement E₁ ou d'un équipement intermédiaire relayant la synchronisation temporelle entre l'équipement E₁ et l'équipement E₂.

Dans un tel cas de figure l'équipement E₂ ne reçoit plus les mises à jour de la synchronisation temporelle issues de la source primaire de synchronisation temporelle. La synchronisation temporelle issue de la source primaire de synchronisation temporelle est normalement, c'est-à-dire lorsqu'il n'y a pas de panne intervenant dans le réseau, transmise successivement par tous les équipements intermédiaires jusqu'à atteindre l'équipement E₂. La référence de synchronisation en fréquence Freq permet alors de maintenir, au niveau de chaque équipement intermédiaire qui la reçoit, la synchronisation temporelle avec l'équipement E₁.

Ce type de situation peut se produire en cas de panne de la source de synchronisation temporelle, ou bien en cas de problème de transmission de la synchronisation temporelle au travers du réseau R.

La combinaison d'une synchronisation temporelle avec une référence de synchronisation en fréquence Freq présente l'avantage de pouvoir augmenter la durée pendant laquelle l'équipement E₂, ou tout équipement intermédiaire, peut rester synchronisé avec l'équipement E₁ sans recevoir de mise à jour de la synchronisation temporelle.

Il peut être avantageux en cas de panne au niveau d'un équipement intermédiaire de stopper la transmission des mises à jour de la synchronisation temporelle vers l'équipement E₂. En effet, il n'est plus utile de continuer à transmettre la synchronisation temporelle d'un équipement intermédiaire n'ayant plus accès à la référence primaire de synchronisation temporelle lorsqu'une référence de synchronisation en fréquence Freq est accessible à l'ensemble des équipements intermédiaires situés entre l'équipement intermédiaire où la panne est détectée et l'équipement E₂.

La réception de la référence de synchronisation en fréquence Freq par ces équipements intermédiaires et l'équipement E₂ leur permet de maintenir leur propre référence locale de synchronisation temporelle pendant la durée de la panne.

## Revendications

1. Procédé de mise à jour d'une référence de synchronisation temporelle échangée entre un premier équipement et au moins un deuxième équipement appartenant à un réseau de communication, le procédé étant **caractérisé par** les étapes suivantes mises en oeuvre par un des deux équipements :
- une étape de réception d'une information de traçabilité relative à une référence de synchronisation en fréquence ;
- une étape de détermination d'une périodicité de mise à jour de la référence de synchronisation temporelle en fonction de ladite information de traçabilité reçue, ladite mise à jour permettant de maintenir la référence de synchronisation temporelle du deuxième équipement.

2. Procédé de mise à jour selon la revendication 1, dans lequel l'information de traçabilité est émise par le deuxième équipement à destination du premier équipement.

3. Procédé de mise à jour selon la revendication 1, dans lequel les étapes de réception et de détermination sont mises en oeuvre par le deuxième équipement, ledit procédé comprenant en outre une étape d'émission, par le deuxième équipement et à destination du premier équipement, d'un message comprenant la périodicité de mise à jour de la référence de synchronisation temporelle.

4. Procédé de mise à jour selon la revendication 1, dans lequel les étapes de réception et de détermination sont mises en oeuvre par le premier équipement, ledit procédé comprenant en outre une étape d'envoi au deuxième équipement de la référence de synchronisation en fréquence et de l'information de traçabilité associée.

5. Equipement apte à échanger une référence de synchronisation temporelle avec au moins un autre équipement appartenant à un réseau de communication, l'équipement étant **caractérisé par** :
- des moyens de réception d'une information de traçabilité relative à une référence de synchronisation en fréquence ;
- des moyens de détermination d'une périodicité de mise à jour de la référence de synchronisation temporelle en fonction de ladite information de traçabilité reçue, ladite mise à jour permettant de maintenir la référence de synchronisation temporelle de l'autre équipement.

6. Equipement selon la revendication 5 comprenant en outre des moyens d'émission d'un message comprenant la périodicité de mise à jour de la référence de synchronisation temporelle.

7. Réseau de communication comprenant au moins un équipement, selon la revendication 5, apte à échanger une référence de synchronisation temporelle avec au moins un autre équipement.

8. Programme d'ordinateur comprenant des instructions de code de programme pour la mise en oeuvre des étapes du procédé de mise à jour selon la revendication 1 lorsque le programme est exécuté par un processeur.

9. Support d'enregistrement lisible par un équipement commutateur sur lequel est enregistré le programme selon la revendication 8.

## Patentansprüche

1. Verfahren zur Aktualisierung einer temporalen Synchronisationsreferenz, die zwischen einer ersten Einrichtung und mindestens einer zweiten Einrichtung, die einem Kommunikationsnetzwerk angehört, ausgetauscht wird, wobei das Verfahren durch die folgenden, von einer der beiden Einrichtungen ausgeführten Schritte gekennzeichnet ist:
- einen Schritt des Empfangens einer Rückverfolgbarkeitsinformation bezüglich einer frequenzbezogenen Synchronisationsreferenz;
- einen Schritt des Bestimmens einer Aktualisierungshäufigkeit der temporalen Synchronisationsreferenz in Abhängigkeit von der empfangenen Rückverfolgbarkeitsinformation, wobei die Aktualisierung es ermöglicht, die temporale Synchronisationsreferenz der zweiten Einrichtung beizubehalten.

2. Verfahren zur Aktualisierung nach Anspruch 1, wobei die Rückverfolgbarkeitsinformation von der zweiten Einrichtung an die erste Einrichtung gesendet wird.

3. Verfahren zur Aktualisierung nach Anspruch 1, wobei die Schritte des Empfangens und Bestimmens von der zweiten Einrichtung ausgeführt werden, wobei das Verfahren ferner einen Schritt des Sendens einer Nachricht, die die Häufigkeit der Aktualisierung der temporalen Synchronisationsreferenz enthält, durch die zweite Einrichtung und an die erste Einrichtung umfasst.

4. Verfahren zur Aktualisierung nach Anspruch 1, wobei die Schritte des Empfangens und Bestimmens von der ersten Einrichtung ausgeführt werden, wobei das Verfahren ferner einen Schritt des Sendens der frequenzbezogenen Synchronisationsreferenz und der zugehörigen Rückverfolgbarkeitsinformation umfasst.

5. Einrichtung, die geeignet ist, eine temporale Synchronisationsreferenz mit mindestens einer anderen Einrichtung, die einem Kommunikationsnetzwerk angehört, auszutauschen, wobei die Einrichtung **gekennzeichnet ist durch**:
- Mittel zum Empfangen einer Rückverfolgbarkeitsinformation bezüglich einer frequenzbezogenen Synchronisationsreferenz;
- Mittel zum Bestimmen einer Aktualisierungshäufigkeit der temporalen Synchronisationsreferenz in Abhängigkeit von der empfangenen Rückverfolgbarkeitsinformation, wobei die Aktualisierung es ermöglicht, die temporale Synchronisationsreferenz der anderen Einrichtung beizubehalten.

6. Einrichtung nach Anspruch 5, umfassend ferner Mittel zum Senden einer Nachricht, die die Aktualisierungshäufigkeit der temporalen Synchronisationsreferenz enthält.

7. Kommunikationsnetzwerk, umfassend mindestens eine Einrichtung nach Anspruch 5, die geeignet ist, eine temporale Synchronisationsreferenz mit mindestens einer anderen Einrichtung auszutauschen.

8. Computerprogramm mit Programmcodeanweisungen zum Ausführen der Schritte des Aktualisierungsverfahrens nach Anspruch 1, wenn das Programm von einem Prozessor abgearbeitet wird.

9. Speichermedium, das von einer Vermittlungseinrichtung gelesen werden kann, auf dem das Programm nach Anspruch 8 gespeichert ist.

## Claims

1. Method for updating a time synchronization reference exchanged between a first device and at least one second device belonging to a communication network, the method being **characterized by** the following steps, implemented by one of the two devices:
- a step of receiving an item of traceability information relating to a frequency synchronization reference;
- a step of determining a periodicity of updating of the time synchronization reference on the basis of said received item of traceability information, said updating enabling to keep the time synchronization reference of the second device.

2. Updating method according to Claim 1, wherein the item of traceability information is transmitted by the second device to the first device.

3. Updating method according to Claim 1, wherein the reception and determination steps are implemented by the second device, said method furthermore comprising a step of transmission, by the second device and to the first device, of a message comprising the periodicity of updating of the time synchronization reference.

4. Updating method according to Claim 1, wherein the reception and determination steps are implemented by the first device, said method furthermore comprising a step of sending, to the second device, the frequency synchronization reference and the associated item of traceability information.

5. Device able to exchange a time synchronization reference with at least one other device belonging to a communication network, the device being **characterized by**:
- means for receiving an item of traceability information relating to a frequency synchronization reference;
- means for determining a periodicity of updating of the time synchronization reference on the basis of said received item of traceability information, said updating enabling to keep the time synchronization reference of the other device.

6. Device according to Claim 5, furthermore comprising means for transmitting a message comprising the periodicity of updating of the time synchronization reference.

7. Communication network comprising at least one device, according to Claim 5, able to exchange a time synchronization reference with at least one other device.

8. Computer program comprising program code instructions for implementing the steps of the updating method according to Claim 1 when the program is executed by a processor.

9. Recording medium able to be read by a switching device and on which the program according to Claim 8 is recorded.
